# NEUE EUROPÄISCHE PATENTSCHRIFT

(11) **EP 2 256 247 B2**
(45) Veröffentlichungstag und Bekanntmachung des Hinweises auf die Entscheidung über den Einspruch: **09.08.2017**
(45) Hinweis auf die Patenterteilung: 23.10.2013
(21) Anmeldenummer: 09006977.4
(22) Anmeldetag: 25.05.2009
(51) Int. Cl.: E01C 19/48

(54) **Straßenfertiger**
Finisher
Finisseuse de route

(43) Veröffentlichungstag der Anmeldung: 01.12.2010
(73) Patentinhaber: Joseph Vögele AG, 67067 Ludwigshafen (DE)
(72) Erfinder: Braun, Arthur, 67146 Deidesheim (DE)
(74) Vertreter: Grünecker Patent- und Rechtsanwälte PartG mbB

(56) Entgegenhaltungen:
- EP-A- 0 489 969
- DE-A1- 3 536 247
- DE-A1- 10 300 745
- DE-A1- 19 545 922
- DE-A1- 19 931 963
- DE-A1-102004 005 673
- DE-A1-102007 019 156
- DE-U1- 9 308 801
- DE-U1- 20 001 039
- JP-A- 2005 307 941
- JP-A- 2006 136 072
- US-B1- 6 668 953

## Beschreibung

Die Erfindung betrifft einen Straßenfertiger der im Oberbegriff des Patentanspruchs 1 angegebenen Art.

Straßenfertiger weisen üblicherweise zumindest temporär hohe Stromleistung benötigende Heizeinrichtungen z. B. in der Einbaubohle, auf, die vom Generator mit Strom versorgt werden. Es hat sich ein Installationskonzept für den Generator durchgesetzt, bei dem der Generator am Ende eines mit dem Leistungsabgabebereich der Kurbelwelle verbundenen Abtriebsstranges sitzt. Aufgrund des hohen Leistungsbedarfes ist der Generator groß und schwer und wird viel Einbauraum für den Generator benötigt. Seine Antriebs-Verbindung mit der Primärantriebsquelle ist schwierig, da die Primärantriebsquelle neben dem Generator z.B. über ein Pumpenverteilergetriebe zahlreiche andere Sekundärabtriebe oder Funktionsbaugruppen oder deren Hydraulikpumpen antreibt. Wird der Generator an dem oder getrennt vom Pumpenverteilergetriebe platziert und beispielsweise über einen Riementrieb von der Kurbelwelle oder dem Pumpenverteilergetriebe angetrieben, entstehen unerwünschte Querbelastungen an einer Ausgangswelle des Pumpenverteilergetriebes oder an der Kurbelwelle des Verbrennungsmotors (EP1118714A). Zumindest eine Getriebestufe zwischen der Kurbelwelle oder einem mit der Kurbelwelle verbundenen Abtriebsstrang und dem Generator hat unter anderem den Zweck, den Generator unabhängig von z. B. der Nenndrehzahl des Verbrennungsmotors mit einer für die Leistungsabgabe optimierten Drehzahl antreiben zu können. Zunehmender elektrischer Leistungsbedarf am Straßenfertiger bringt einen herkömmlichen konventionell im Straßenfertiger am Ende eines Abtriebsstrangs platzierten Generator häufig an eine Leistungsgrenze, sodass gegebenenfalls sogar mehrere platzbeanspruchende und schwere Generatoren benötigt werden und unterzubringen sind. Die bekannten Konzepte erschweren es bisher generell, den Generator platzsparend unterzubringen und mit optimaler Drehzahl anzutreiben (mit optimaler Relativgeschwindigkeit zwischen Stator und Läufer). Ein wichtiger Gesichtspunkt bei immer größerem und leistungsstärkerem Generator sind ferner die hohe Anlaufleistung und der Nennleistungsbedarf, die vom Primärantriebsaggregat direkt oder über mehrere Verlustquellen in zwischengeschalteten Getrieben zu decken sind. Die Anlaufleistung des Generators erschwert das Starten des Primärantriebsaggregats besonders bei ungünstigen Witterungsverhältnissen. Der Schleppleistungsbedarf des Generators vermindert selbst ohne nennenswerte Stromabnahme spürbar die an sich zu einer schnellen Transportfahrt des Straßenfertigers benötigte Leistung des Primärantriebsaggregats. Die Leistungsausbeute des Generators kann auch unbefriedigend oder begrenzt sein, wenn sich der Generator als eine Funktionseinheit ein relativ aufwendiges, leistungsverzweigendes Pumpenverteilergetriebe mit anderen Funktionseinheiten teilen muss.

Bei einem aus DE 10 2004 005 673 A bekannten Hybridsystem für einen Personenkraftwagen ist bei einigen Ausführungsformen zwischen dem Verbrennungsmotor und einem Planeten-Differentialgetriebe ein Generator angeordnet, der einen alternativ oder additiv zum Verbrennungsmotor treibenden Elektromotor mit elektrischer Leistung versorgt. Der Generator ist Teil eines elektrischen oder hydraulischen Wandlers und mit sämtlichen weiteren Komponenten des Hybridsystems in einem Triebwerk untergebracht, das nur mit der Kurbelwelle des Verbrennungsmotors verbunden ist. In den meisten Ausführungsformen wird der Generator in dem Triebwerk stromab beispielsweise einer hydraulischen oder mechanischen oder elektrischen Achse vom Verbrennungsmotor angetrieben, sofern dieser bei rein elektrischem Betrieb des Hybridsystems nicht abgekoppelt ist.

In einem aus DE 35 36 247 A bekannten Nutzlastfahrzeug, insbesondere einem auf Verkehrsflughäfen nutzbaren Nutzlastfahrzeug zum Ziehen schwerer Lasten, das zum Betrieb im Freien entweder nur über einen Hauptantriebsstrang von einem Verbrennungsmotor, einer Verstellpumpe und einem Hydromotor oder kombiniert vom Verbrennungsmotor und einem von einer leistungsstarken Batterie und/oder dem Generator versorgten Elektromotor hydrostatisch angetrieben wird, oder in geschlossenen Räumen elektrisch über den aus der Batterie gespeisten Elektromotor und eine Hydraulikpumpe, ist im Hauptantriebsstrang der gekapselt ausgebildete Generator an einem Standard-SAE-Flansch des Verbrennungsmotors montiert. Die Verstellpumpe ist koaxial am Ausgang des Generators montiert. Es wird so ein kompaktes Primärantriebsaggregat geschaffen, das es ermöglicht, eine Anhängerkupplung so nahe beim Führerhaus zu platzieren, dass der Fahrzeugführer vom Fahrersitz aus die Anhängerkupplung betätigen kann.

Bei einem aus JP 2005-307941 A bekannten Kühlsystem ist ein Flüssigkeitskühlkreis mit einem Radiator auch für einen von einem Fahrmotor getriebenen Generator vorgesehen.

In einer Hybrid-Baumaschine gemäß JP 2006-136072 A ist zwischen einem Verbrennungsmotor und einer Hydraulikpumpe ein Synchronmotor-Generator eines Permanentmagnettyps als zusätzliche Antriebsquelle vorgesehen, der zum Laden einer Batterie wahlweise auch im Generatorbetrieb Strom erzeugt.

Bei dem aus EP 0 489 969 A bekannten Straßenfertiger treibt der quer in das Chassis eingebaute Dieselmotor direkt oder über ein Getriebe einen Drehstromgenerator. Der Generator ist mit dem Dieselmotor zusammengeflanscht und versorgt den größten Teil hier elektrisch betreibbarer Funktionseinheiten mit Strom. Der Drehstromgenerator ist mit zugehörigen Steuersystemen sogar größer und länger als der Dieselmotor, ist schwer und benötigt sehr viel Einbauraum im Chassis. Falls weitere Funktionseinheiten hydraulisch betreibbar sind, so werden diese an einen Nebenantrieb angeschlossen, der von dem dem Drehstromgenerator zum Leistungsabgabebereich vorgeschalteten Getriebe abzweigt.

In Straßenfertigern eingesetzte Verbrennungsmotoren sind häufig mit einem relativ ausladenden Schwungrad- oder Kupplungsgehäuse versehen, das z.B. SAE-Vorschriften entsprechend standardisiert sein kann, und ein kostengünstig handelsüblicher integraler oder angebauter Teil des Motorblocks ist. Solche standardisierten Kupplungs- oder Schwungradgehäuse bieten in der Regel im Inneren bisher nicht genutzten Ringraum zwischen der gegebenenfalls vorgesehenen drehelastischen Kupplung am Schwungrad und der Innenwand des Kupplungs- und Schwungradgehäuses.

Der Erfindung liegt die Aufgabe zugrunde, einen Straßenfertiger der eingangs genannten Art anzugeben, der sich durch einen zur Versorgung der Heizeinrichtungen ausreichend leistungsstarken und platzsparend integrierten Generator auszeichnet.

Die gestellte Aufgabe wird mit den Merkmalen des Patentanspruchs 1 gelöst.

Durch den Einbau des Generators in das Schwungrad- oder Kupplungsgehäuse oder an dessen Stelle, d.h. in üblicherweise nicht oder weitgehend nicht genutzten, vorhandenen Bauraum, wird zur Unterbringung des Generators erheblich Platz eingespart. Das Primärantriebsaggregat wird durch den Generator ggf. nicht oder nicht nennenswert verlängert. Der kompakt untergebrachte Generator deckt auch hohen elektrischen Leistungsbedarf, da er mit hoher und/oder optimaler Relativgeschwindigkeit zwischen dem Läufer und dem Stator betreibbar ist, und verlustarm "direkt an der Quelle" der Motorleistung sitzt. Der Abtriebsstrang, der an den Leistungsausgangsbereich der Kurbelwelle angeschlossen oder anschließbar ist, durchsetzt den Läufer des Generators und nutzt im Inneren des Generators zur Verfügung stehenden oder geschaffenen Raum. Vom Abtriebsstrang abhängige Funktionsgruppen bzw. deren Pumpen, sind unabhängig vom stromaufliegenden Generator über optimale Getriebeabstufungen oder/und Leistungsverzweigungen antreibbar. Der Läufer des Generators ist mit einer von der Drehzahl des Abtriebsstrangs verschiedenen Drehzahl antreibbar. Die Antriebsdrehzahl des Generators ist zu dessen optimaler Leistungsabgabe wählbar, und zwar in einem weiten Bereich unabhängig von beispielsweise der Nenndrehzahl des Verbrennungsmotors (etwa 1700 bis 2300 U/min). Somit lässt sich der Verbrennungsmotor mit hinsichtlich seiner Energiebilanz optimaler Drehzahl betreiben, und werden auch z.B. Pumpen der Funktionsgruppen über das Pumpenverteilergetriebe systemoptimiert angetrieben.

Es sind zwar Hybridantriebe für Baumaschinen bekannt, in denen zur Umweltentlastung und vor allem zur Brennstoffeinsparung ein Verbrennungsmotor mit einem Generator/ Elektromotor kombiniert ist, der über eine Batterie den Verbrennungsmotor mit zusätzlicher Abtriebsleistung unterstützt oder zeitweise die Batterie lädt. Hierbei dient der Generator/ Elektromotor jedoch nicht zur unmittelbaren Versorgung weiterer, gegebenenfalls hohe Stromleistung benötigender Ausstattungsteile eines Fahrzeugs, sondern ist hierfür meist noch eine übliche vom Verbrennungsmotor separat angetriebene Lichtmaschine vorgesehen (DEMTECH AG, CH- 6331 Hünenberg CH, www.demtech-ch/de-hybriddrive.htm).

Dabei nutzt der Generator bisher nicht genutzten Einbauraum im, vorzugsweise standardisierten und somit kostengünstigen, Schwungrad- oder Kupplungsgehäuse zumindest zum Teil, und zwar in dem großen Gehäuse einen Ringraum um die relativ kleinbauende drehelastische Kupplung. Dadurch wird im Straßenfertiger Einbauraum zum Unterbringen des Generators eingespart oder für andere Funktionsgruppen nutzbar.

Alternativ kann ein Statorring oder ein den Statorring enthaltendes Zwischengehäuse des Generators zwischen dem Verbrennungsmotor und dem Pumpenverteilergetriebe am Motorblock direkt montiert sein. Der Generator ersetzt das Kupplungs- und Schwungradgehäuse, und dient als Träger des Pumpenverteilergetriebes.

Besonders zweckmäßig ist der Generator ein permanentmagneterregter Ringgenerator mit einem hohlen Ringläufer zum Durchführen des Abtriebsstrangs zum Pumpenverteilergetriebe. Der Ringgenerator ist kompakt, insbesondere axial relativ kurz, und sehr leistungsstark, da die Relativgeschwindigkeit zwischen dem Ringläufer und einem Statorring bauartbedingt hoch ist. In dem Zwischenraum zwischen dem Verbrennungsmotor und dem Pumpenverteilergetriebe ist auch in Durchmesserrichtung relativ viel Platz verfügbar, der zum Unterbringen von Wicklungen und/oder Steuereinrichtungen des Ringgenerators nutzbar ist.

Bei einer bevorzugten Ausführungsform führt der Abtriebsstrang zu dem am Verbrennungsmotor anschließend an den Generator montierten, leistungsverzweigenden Pumpenverteilergetriebe, von dem weitere Funktionsgruppen nachrangig zum Generator oder allenfalls parallel zu diesem angetrieben werden. Trotz des integrierten Generators ergibt sich mit dem direkt oder indirekt angebauten Pumpenverteilergetriebe ein kompaktes Primärantriebsaggregat.

Wenn der Läufer bei laufendem Verbrennungsmotor permanent angetrieben wird, definiert er ein Massenträgheitsmoment, das es ermöglicht, nur ein kleines oder kein Schwungrad vorzusehen.

Bei einer weiteren Ausführungsform ist dem Generator zumindest eine Planetengetriebe-Stufe zugeordnet, um den Generator und den Verbrennungsmotor jeweils mit optimalen Drehzahlen betreiben zu können. Die Planetengetriebestufe baut klein, lässt sich in teilweise ohnedies verfügbarem Bauraum unterbringen, und erzeugt keine unerwünschten Querkräfte.

Bei einer weiteren Ausführungsform ist zwischen der Kurbelwelle oder dem Abtriebsstrang und dem Läufer des Generators, und/oder dem Pumpenverteilergetriebe eine schaltbare Kupplung angeordnet. Die schaltbare Kupplung ermöglicht es, den Generator und/oder das Pumpenverteilergetriebe vom Verbrennungsmotor abzukoppeln, was beispielsweise die Schlepplast des Verbrennungsmotors beim Start, insbesondere unter extremen Witterungsbedingungen und/oder bei Transportfahrt verringern lässt, und das Startverhalten verbessert. Hierbei kann auch die gegebenenfalls vorgesehene Planetengetriebe-Stufe abgekoppelt werden. Zweckmäßig wird die schaltbare Kupplung, vorzugsweise zum Abkuppeln der Planetengetriebe-Stufe und des Pumpenverteilergetriebes vom Abtriebsstrang, in der Planetengetriebe-Stufe oder im Pumpenverteilergetriebe untergebracht, um zur kompakten Bauweise beizutragen, und dort gegebene Möglichkeiten zur Lagerung, Kühlung, hydraulischen Versorgung und dgl. mitzunutzen.

Planetengetriebe- Stufe und des Pumpenverteilergetriebes vom Abtriebsstrang, in der Planetengetriebe- Stufe oder im Pumpenverteilergetriebe untergebracht, um zur kompakten Bauweise beizutragen, und dort gegebene Möglichkeiten zur Lagerung, Kühlung, hydraulischen Versorgung und dgl. mitzunutzen.

Bei einer weiteren, zweckmäßigen Ausführungsform ist die schaltbare Kupplung wirkungsmäßig zwischen dem zu einem beispielsweise vom Pumpenverteilergetriebe getragenen Fahrantriebs-Pumpenaggregat durchgehenden Abtriebsstrang und einer Eingangswelle des Pumpenverteilergetriebes sowie der Planetengetriebe-Stufe angeordnet, um ausgerückt bei nach wie vor angetriebenem Fahrantriebs-Pumpenaggregat die Planetengetriebe-Stufe und/oder die Eingangswelle des Pumpenverteilergetriebes abzukuppeln. Dies kann ein Betriebszustand für Transportfahrt des Straßenfertigers mit voller Leistung des Verbrennungsmotors für hohe Transportgeschwindigkeit sein. Bei Transportfahrt werden die vom Pumpenverteilergetriebe versorgten Funktionsgruppen und unter Umständen der Generator zum Betreiben von Heizungseinrichtungen nicht benötigt. In diesem Betriebszustand wird auch der Treibstoffverbrauch deutlich reduziert.

Da aufgrund hoher, vom Generator abgenommener Stromleistung und relativ hoher Drehzahlen zusätzlich Wärme generiert werden kann, ist bei einer zweckmäßigen Ausführungsform ein Kühlsystem zumindest für den Generator, vorzugsweise auch die PlanetengetriebeStufe, vorgesehen. Das Kühlsystem nimmt in diesem Bereich generierte und auf normale Weise schlecht abzuführende Wärme auf und ermöglicht einen optimalen Betrieb des Ringgenerators.

In einer baulich einfachen Ausführungsform ist am Läufer wenigstens ein Kühllüfterrad angeordnet, wobei der Ringläufer trocken läuft und in diesem Bereich mit Luftkühlung gekühlt wird.

Alternativ kann ein Flüssigkeitskühlsystem vorgesehen sein, das, vorzugsweise, zumindest einen dann über das Pumpenverteilergetriebe geführten Kühlkreislauf, z.B. mit dem Getriebeöl oder einem anderen Wärmeträger, umfasst. Das Pumpenverteilergetriebe enthält nennenswertes Ölvolumen und leitet im Öl enthaltene Wärme effizient nach außen ab. Deshalb lässt sich das Pumpenverteilergetriebe ohne aufwändige externe Kühleinrichtungen zum Kühlen des Ringgenerators und dessen Planetenradgetriebe-Stufe nutzen, obwohl ggf. sogar ein zusätzlicher externer Ölkühler vorgesehen sein könnte.

Bei einer weiteren, zweckmäßigen Ausführungsform ist die schaltbare Kupplung wirkungsmäßig zwischen dem zu einem beispielsweise vom Pumpenverteilergetriebe getragenen Fahrantriebs-Pumpenaggregat durchgehenden Abtriebsstrang und einer Eingangswelle des Pumpenverteilergetriebes sowie der Planetengetriebe-Stufe angeordnet, um ausgerückt bei nach wie vor angetriebenem Fahrantriebs-Pumpenaggregat die Planetengetriebe-Stufe und/oder die Eingangswelle des Pumpenverteilergetriebes abzukuppeln. Dies kann ein Betriebszustand für Transportfahrt des Straßenfertigers mit voller Leistung des Verbrennungsmotors für hohe Transportgeschwindigkeit sein. Bei Transportfahrt werden die vom Pumpenverteilergetriebe versorgten Funktionsgruppen und unter Umständen der Generator zum Betreiben von Heizungseinrichtungen nicht benötigt. In diesem Betriebszustand wird auch der Treibstoffverbrauch deutlich reduziert.

Da aufgrund hoher, vom Generator abgenommener Stromleistung und relativ hoher Drehzahlen zusätzlich Wärme generiert werden kann, ist bei einer zweckmäßigen Ausführungsform ein Kühlsystem zumindest für den Generator, vorzugsweise auch die PlanetengetriebeStufe, vorgesehen. Das Kühlsystem nimmt in diesem Bereich generierte und auf normale Weise schlecht abzuführende Wärme auf und ermöglicht einen optimalen Betrieb des Ringgenerators.

In einer baulich einfachen Ausführungsform ist am Läufer wenigstens ein Kühllüfterrad angeordnet, wobei der Läufer trocken läuft und in diesem Bereich mit Luftkühlung gekühlt wird.

Alternativ kann ein Flüssigkeitskühlsystem vorgesehen sein, das, vorzugsweise, zumindest einen dann über das Pumpenverteilergetriebe geführten Kühlkreislauf, z.B. mit dem Getriebeöl oder einem anderen Wärmeträger, umfasst. Das Pumpenverteilergetriebe enthält nennenswertes Ölvolumen und leitet im Öl enthaltene Wärme effizient nach außen ab. Deshalb lässt sich das Pumpenverteilergetriebe ohne aufwändige externe Kühleinrichtungen zum Kühlen des Ringgenerators und dessen Planetenradgetriebe-Stufe nutzen, obwohl ggf. sogar ein zusätzlicher externer Ölkühler vorgesehen sein könnte.

Der Innendurchmesser des hohlen Läufers des Ringgenerators kann in etwa dem Außendurchmesser des Schwungrades des Verbrennungsmotors entsprechen. Es ergibt sich aufgrund des relativ großen Durchmessers des Ringgenerators hohe Relativgeschwindigkeit zwischen dem Ringläufer und dem Statorring und damit eine optimale Leistungsausbeute bzw. eine hohe Stromleistung.

Zweckmäßig wird vom Pumpenverteilergetriebe über einen Riementrieb oder eine Gelenkwelle wenigstens ein weiterer Generator angetrieben, sozusagen ein Hilfsgenerator für nebengeordnete Funktionsgruppen, oder falls der Haupt-Generator abkuppelbar ist. Der HilfsGenerator kann z.B. am Pumpenverteilergetriebe gelagert sein, so dass er die Kurbelwelle des Verbrennungsmotors nicht unerwünscht mit Querkräften beaufschlagt, oder kann sogar im Chassis des Straßenfertigers gelagert sein. Für den Hilfsgenerator lässt sich ein optimaler Platz im Straßenfertiger wählen, weil er dank des Riementriebes oder einer Gelenkwelle gegenüber dem Primärantriebsaggregat versetzt platzierbar ist.

Anhand der Zeichnungen werden Ausführungsformen des Erfindungsgegenstandes erläutert. Es zeigen:
- Fig. 1: eine schematische Seitenansicht eines Straßenfertigers,
- Fig. 2: einen Teil eines Achsschnittes zur Verdeutlichung der Integration eines Generators direkt beim Leistungsabgabebereich der Kurbelwelle des Verbrennungsmotors,
- Fig. 3: eine Schemadarstellung einer weiteren Ausführungsform, und
- Fig. 4: eine Schemadarstellung einer weiteren Ausführungsform.

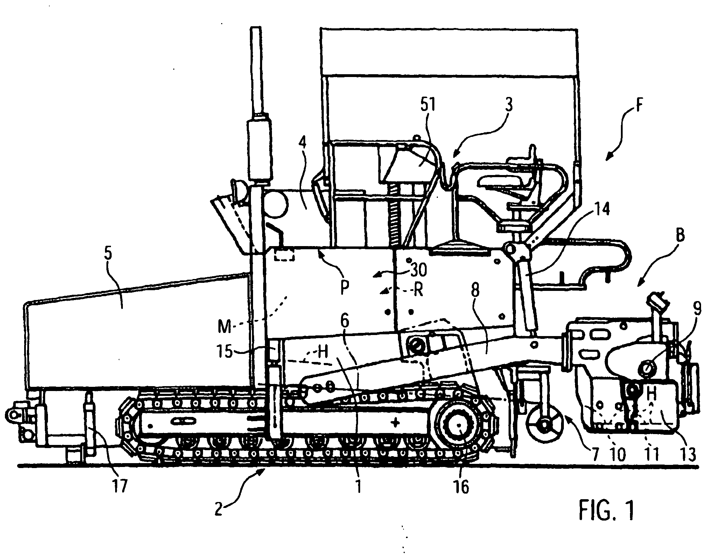

Ein Straßenfertiger F in Fig. 1 weist ein an einem Chassis 1 angeordnetes Fahrwerk 2, hier ein Raupenfahrwerk, mit wenigstens einem, z.B. hydraulisch, angetriebenen Rad 16 auf. Auf dem Chassis 1 befindet sich ein Führerstand 3, vor dem eine Primärantriebsquelle P, z.B. ein Verbrennungsmotor M, wie ein Dieselmotor, mit einem integrierten Generator R und ein Pumpenverteilergetriebe 30 angeordnet sind. Das Primärantriebsaggregat P ist im Chassis 1 z.B. über seitliche Klappen und eine obere Haube 4 zu Wartungszwecken zugänglich.

In Arbeitsfahrtrichtung des Straßenfertigers F in Fig. 1 (von rechts nach links) befindet sich vor dem Primärantriebsaggregat P im Chassis 1 ein Bunker 5 für Einbaumaterial. Vom Bunker 5 führt im Chassis 1, z.B. hydraulisch antreibbar, eine Längsfördervorrichtung 6 zu einer hinter dem Chassis angeordneten Querverteileinrichtung 7, typischerweise einer Querverteilschnecke. Am Chassis 1 sind an beiden Seiten Zugholme 8 angelenkt, an denen hinten eine Einbaubohle B montiert ist, die beispielsweise aus einer Grundbohle mit in Führungssystemen 9 verstellbaren Ausziehbohlenteilen 13 besteht und elektrische Heizeinrichtungen H beispielsweise für Pressleisten oder Tamper 10, 11 und bodenseitige Glättbleche enthält. Bei Transportfahrt des Straßenfertigers kann die Einbaubohle B in der gezeigten angehobenen Transportstellung mittels Zylindern 14 gegenüber dem Chassis abgestützt sein. Ferner dienen Zylinder 15 zur Höhenverstellung der Anlenkpunkte der beiden Zugholme 8. Vorne liegende Hydraulikzylinder 17 als Hydraulikverbraucher oder Funktionsbaugruppen dienen beispielsweise zur Verstellung der Seitenwände des Bunkers. Im Führerstand 3 ist eine Bedienkonsole 51 angeordnet, mit der sämtliche Funktionsbaugruppen und auch das Primärantriebsaggregat P steuerbar und überwachbar sind.

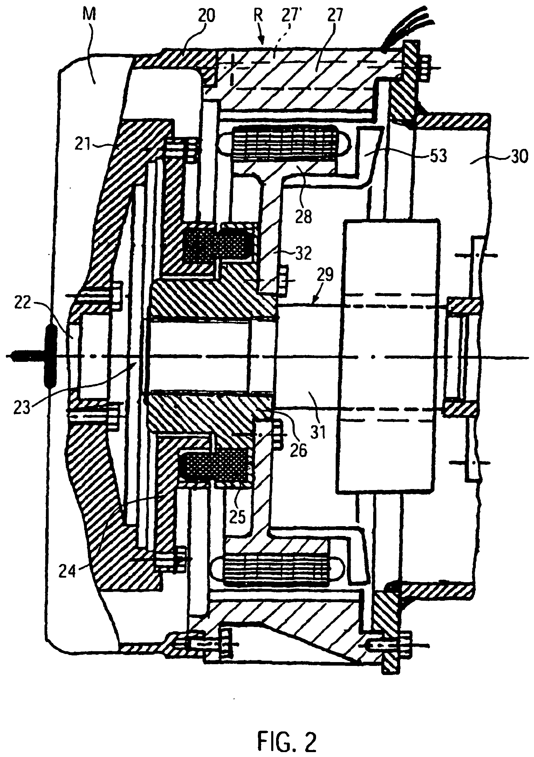

Gemäß Fig. 2 weist der Verbrennungsmotor M einen Motorblock mit einem Kupplungs- oder Schwungradgehäuse 20 auf, das ein standardisiertes Gehäuse 20 sein kann (z.B. entsprechend SAE-Vorschriften), und das einen Leistungsabgabebereich einer Kurbelwelle 22 des Verbrennungsmotors M umgibt. Auf der Kurbelwelle 22 ist ein Schwungrad 21 angeordnet, mit dem im Gehäuse 20 eine drehelastische Kupplung 23 verbunden ist. Eine Kupplungsnabe 24 ist mit dem Schwungrad 21 verschraubt und treibt über elastische Elemente 25 eine zweite Kupplungsnabe 26. In die zweite Kupplungsnabe 26 ist beispielsweise eine Eingangswelle31 eines Abtriebsstranges 29 drehfest eingesetzt, der zu dem Pumpenverteilergetriebe 30 führt. Zwischen dem Kupplungs- oder Schwungradgehäuse 20 und dem Pumpenverteilergetriebe 30 ist der Generator R eingesetzt, und zwar mit einem Statorring 27 direkt angeflanscht an einen Endflansch des Kupplungs- oder Schwungradgehäuses 20, teilweise in den Innenraum des Gehäuses 20 eingreifend. Ein Montierflansch des Pumpenverteilergetriebes 30 ist an dem Generator R montiert. Der Generator R ist sozusagen sandwichartig zwischen dem Pumpenverteilergetriebe 30 und dem Verbrennungsmotor M, teilweise in das Gehäuse 20 eingreifend, installiert. Gegebenenfalls ist der Statorring 27 in einem nicht näher hervorgehobenen Statorring- Zwischengehäuse 27' angeordnet. In einer nicht gezeigten Ausführung wird der Generator R zumindest zu einem erheblichen Teil in das Gehäuse 20 eingebaut.

Bei einer nicht gezeigten Alternative könnte der Generator R auch direkt an den Motorblock des Verbrennungsmotors M angeflanscht sein und sozusagen das Schwungrad- und Kupplungsgehäuse 20 ersetzen.

Der Generator R ist zweckmäßig ein permanentmagneterregter Ringgenerator R und enthält innen im Statorring 27 einen als hohler Ringläufer ausgebildeter Läufer 28, dessen Durchmesser annähernd dem Durchmesser des Schwungrades 21 entsprechen kann.

Der Läufer 28 ist in Fig. 2 direkt mit einem Steg 32 auf die Kupplungsnabe 26 geschraubt, läuft hier trocken und kann zu Kühlungszwecken ein Lüfterrad 53 tragen.

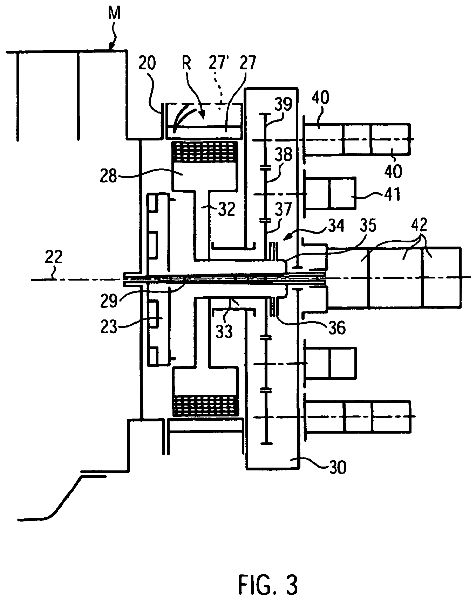

In der Ausführungsform in Fig. 3 ist der als Ringgenerator ausgebildete Generator R zwischen dem Kupplungs- oder Schwungradgehäuse 20 und dem Pumpenverteilergetriebe 30 direkt am Verbrennungsmotor M installiert. Die Kurbelwelle 22 ist über die drehelastische Kupplung 23 mit dem Abtriebsstrang 29 verbunden, der sich durch den Läufer 28 in das Pumpenverteilergetriebe 30 und durch dieses hindurch zu einem Fahrpumpenaggregat 42 erstreckt, das an das Gehäuse des Pumpenverteilergetriebes 30 zentral angeflanscht ist und somit, vom Abtriebsstrang 29 permanent angetrieben wird.

Im Pumpenverteilergetriebe 30 sind erste, zweite und dritte Zahnradgetriebe-Stufen 37, 38, 39 enthalten. Die zentrale Getriebestufe 37 wird durch eine Hohlwelle 33 angetrieben, auf der auch der Steg 32 des Läufers 28 des Generators R drehfest angeordnet ist.

Im Pumpenverteilergetriebe 30 kann auf dem Abtriebsstrang 29 eine schaltbare Kupplung 34 vorgesehen sein, die in ausgerücktem Zustand die Hohlwelle 33 vom Abtriebsstrang 29 abkuppelt, so dass dann die Getriebestufen 37, 38, 39 im Pumpenverteilergetriebe 30 und auch der Generator R bei laufendem Verbrennungsmotor M stehen, während, z.B. für Transportfahrt, das Fahrpumpenaggregat 42 nach wie vor angetrieben wird. Gegebenenfalls wird auch der Generator R permanent angetrieben, und nicht abgekuppelt.

An mehreren Leistungsverzweigungen des Pumpenverteilergetriebes 30 sind beispielsweise Hydraulikpumpen 40, 41 für hydraulische Arbeitsfunktionen oder Funktionsgruppen des Straßenfertigers und/oder der Einbaubohle B angeordnet, die jeweils vom Pumpenverteilergetriebe 30 antreibbar sind. Der als Ringgenerator ausgebildete Generator R ist in dem in Durchmesserrichtung zur Verfügung stehenden Einbauraum um die drehelastische Kupplung 23 sandwichartig zwischen dem Pumpenverteilergetriebe 30 und dem Kupplungs- oder Schwungradgehäuse 20 und ggf. teilweise in dieses eingesetzt, gegebenenfalls mit einem Statorring-Zwischengehäuse 27', das dann sogar das Gehäuse 20 ersetzen kann.

In eingerücktem Zustand der schaltbaren Kupplung 34, die einen mit dem Abtriebsstrang 29 drehfest gekuppelten Kupplungsteil 35 und ein Schaltelement 36, z.B. mehrere hydraulisch betätigbare Kupplungsscheiben, aufweist, wird die Hohlwelle 33 angetrieben, so dass der Läufer 28 des Generators R wie auch die Getriebestufen 37, 38, 39 des Pumpenverteilergetriebes 30 angetrieben werden.

Es wäre denkbar, in Fig. 3 mit der schaltbaren Kupplung 34 auch das Fahrpumpenaggregat 42 (mehrere Pumpenstufen) abzukoppeln, oder zum wahlweisen Abkoppeln des Fahrpumpenaggregats 42 eine weitere schaltbare Kupplung (nicht gezeigt) vorzusehen.

Im Falle einer hydraulischen Kupplung 34 kann im Hydrauliksystem ein Druckspeicher und/oder eine permanent antreibbare Hilfspumpe vorgesehen sein, um bei ausgerückter Kupplung und abgekuppelten Pumpen den Schaltdruck zum Einrücken bereitzustellen.

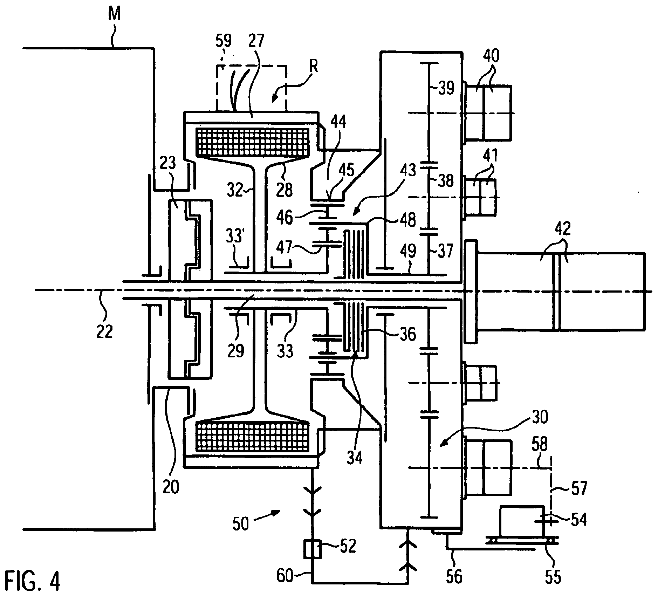

Die Ausführungsform in Fig. 4 hat einen ähnlichen Aufbau wie die der Fig. 3, unterscheidet sich jedoch davon dadurch, dass zwischen dem Abtriebsstrang 29 und dem Läufer 28 zumindest eine Planetenrad-Getriebestufe 43 vorgesehen ist, vorzugsweise in Verbindung mit der schaltbaren Kupplung 34, oder ohne eine schaltbare Kupplung 34. Zweck der Planetenrad-Getriebestufe 43 ist es, den Läufer 28 mit einer z. B. bei Nenndrehzahl des Verbrennungsmotors M optimalen Drehzahl und damit Relativgeschwindigkeit gegenüber dem Statorring 27 anzutreiben, beispielsweise mit einer Unter- oder Übersetzung.

Die Planetenrad-Getriebestufe 43 ist entweder zum Teil im Inneren des Generators R untergebracht, oder mittels eines Zwischengehäuses 44 zwischen dem Generator R und dem Pumpenverteilergetriebe 30, oder ggf. im Pumpenverteilergetriebe. In dem Zwischengehäuse 44 ist innen eine Ringverzahnung 45 vorgesehen, mit der mehrere Planetenräder 46 kämmen, die auf einem Planetenradträger 48 drehbar gelagert sind. Der Planetenradträger 48 treibt in dieser Ausführungsform über eine Hohlwelle 49, die im Pumpenverteilergetriebe 30 gelagert ist, die Getriebestufen 37, 38, 39 des Pumpenverteilergetriebes. Der Abtriebsstrang 29 geht, vorzugsweise, direkt zu dem Fahrpumpenaggregat 42 durch das Pumpenverteilergetriebe 30 durch, so dass das Fahrpumpenaggregat 42 permanent angetrieben wird. Die Planetenräder 46 auf dem Planetenradträger 48 kämmen mit einer Innenverzahnung 47 eines Zahnrades auf der Hohlwelle 33, die mit dem Steg 32 des Ringläufers 28 verbunden und beispielsweise bei 33' gelagert ist. Im Planetenradträger 48 ist, vorzugsweise, die schaltbare Kupplung 34 untergebracht, um wahlweise den Planetenradträger 48 und die Hohlwelle 49 mit dem Abtriebsstrang 29 zu kuppeln oder davon abzukuppeln. Gegebenenfalls lässt sich mit der Kupplung 34 nur die Hohlwelle 49 abkuppeln.

Um im Generator R und gegebenenfalls der Planetenrad-Getriebestufe 43 generierte Wärme wirkungsvoll abzuführen, ist ein Flüssigkeits-Kühlsystem 50 vorgesehen, das einen über das Pumpenverteilergetriebe 30 geführten Kreislauf 60 für, z.B. Getriebeöl, aufweist, wobei eine Zirkulationspumpe (nicht gezeigt) optional integriert sein kann. Gegebenenfalls ist alternativ oder additiv in den Kreislauf 60 ein gesonderter Ölkühler 52 vorgesehen. Es könnte auch ein anderer Wärmeträger zum Kühlen verwendet werden.

Ferner ist als optionale Ausstattung am Pumpenverteilergetriebe 30 in einer Lagerung 56 ein Hilfsgenerator 54 vorgesehen (alternativ ist der Hilfsgenerator 54 in einer eigenen Lagerung 55 im Chassis des Straßenfertigers F vom Pumpenverteilergetriebe 30 getrennt gelagert). Der Hilfsgenerator 54 wird beispielsweise von einem Leistungsausgang 58 des Pumpenverteilergetriebes 30 über einen Riementrieb oder eine Gelenkwelle 57 angetrieben, z.B. permanent.

Der Generator R dient u. a. dazu, den hohen Leistungsbedarf verschiedener elektrischer Heizeinrichtungen H im Straßenfertiger F, z.B. in der Einbaubohle B oder auch im Bereich der Längsfördervorrichtung 6 im Chassis 1 mit Strom zu decken.

Der Generator R kann, um das Startverhalten des Verbrennungsmotors M zu verbessern, zum Starten und Warmlaufen über die schaltbare Kupplung 34 abgetrennt werden. Es ist allerdings auch möglich, nur das Pumpenverteilergetriebe 30 abzukoppeln und den Generator R anzutreiben, um nach dem Start bereits die Heizeinrichtungen H auf Betriebstemperatur zu bringen, ohne die Schleppwiderstände des Pumpenverteilergetriebes und der daran angeschlossenen Funktionsgruppen überwinden zu müssen. Ferner ist es denkbar, den Generator R und/oder das Pumpenverteilergetriebe 30 über die schaltbare Kupplung 34 bei Transportfahrt abzukoppeln, da bei Transportfahrt im Regelfall keine Heizeinrichtungen betätigt oder Funktionsbaugruppen gesteuert werden. Nur das Fahrpumpenaggregat 42 wird dann angetrieben, um mit optimal hoher Transportgeschwindigkeit und/oder optimiertem Brennstoffverbrauch fahren zu können.

Die zumindest eine Planetenrad-Getriebestufe 43 kann bei entsprechender Auslegung den Generator R mit optimaler Drehzahl antreiben. Um den Generator R platzsparend unterzubringen, ist es gegenüber bewährten Baukonzepten gegebenenfalls nur erforderlich, die Pumpenverteilergetriebewelle bzw. den Abtriebsstrang 29 entsprechend der axialen Länge des Generators zu verlängern. Eine elektrische oder elektronische Steuerung mit Umrichtern oder Wechselrichtern kann entweder am Generator R direkt angebaut sein, oder an geeigneter Stelle im Straßenfertiger platziert werden. Das Pumpenverteilergetriebe 30 bzw. dessen Getriebestufen 37, 38, 39 können ebenfalls mit optimalen Drehzahlen oder Drehzahlverhältnissen weitgehend unabhängig von der zum Betrieb des Generators R optimalen Drehzahl angetrieben werden. Der Generator R ist zweckmäßig ein kompakter, leistungsstarker permanentmagneterregter Ringgenerator mit hohlem Ringläufer und ist so am Verbrennungsmotor M angeordnet, dass er zumindest im Wesentlichen zur Kurbelwelle 22 koaxial ist und von dem Abtriebsstrang 29 zum Pumpenverteilergetriebe 30 durchsetzt wird.

## Patentansprüche

1. Straßenfertiger (F) mit einem Verbrennungsmotor (M), insbesondere Dieselmotor, als Primärantriebsaggregat (P), wobei die Kurbelwelle (22) des Verbrennungsmotors (M) in einem Leistungsabgabebereich endet und im Straßenfertiger (F) zumindest zur Versorgung am Straßenfertiger oder/und in einer Einbaubohle (B) des Straßenfertigers vorgesehener, elektrischer Heizeinrichtungen (H) wenigstens ein vom Verbrennungsmotor (M) über den Leistungsabgabebereich antreibbarer Generator (R) sowie wenigstens ein Pumpenverteilergetriebe (30) vorgesehen sind, **dadurch gekennzeichnet,**
**dass** der Generator (R) an oder in einem Kupplungs- oder Schwungradgehäuse (20) oder anstelle des Kupplungs- oder Schwungradgehäuses (20) des Verbrennungsmotors (M) koaxial zur Kurbelwelle (22) mit dem Verbrennungsmotor (M) verbunden ist,
**dass** das Pumpenverteilergetriebe (30) an der dem Verbrennungsmotor (M) abgewandten Seite des Generators (R) montiert ist,
**dass** ein im Leistungsabgabebereich über eine drehelastische Kupplung (23) permanent an die Kurbelwelle (22) angeschlossener Abtriebsstrang (29) durch einen Läufer des Generators (R) zumindest zum Pumpenverteilergetriebe (30) geführt ist, und
**dass** zumindest der Generator (R) mit einer von der Drehzahl des Abtriebsstranges (29) verschiedenen Drehzahl antreibbar ist.

2. Straßenfertiger nach Anspruch 1, **dadurch gekennzeichnet, dass** der Generator (R) zumindest zum Teil in einen Ringraum eines am Motorblock des Verbrennungsmotors (M) vorgesehenen Kupplungs- und Schwungradgehäuses (20) eingebaut ist, und dass der Ringraum zwischen der drehelastischen Kupplung (23) und dem Kupplungs- und Schwungradgehäuse (20) vorhanden ist.

3. Straßenfertiger nach Anspruch 1, **dadurch gekennzeichnet, dass** der Generator (R) mit einem Statorring (27) oder einem den Statorring (27) enthaltenden Zwischengehäuse (27') zwischen dem Motorblock des Verbrennungsmotors (M) und dem Pumpenverteilergetriebe (30) angeordnet ist.

4. Straßenfertiger nach Anspruch 1, **dadurch gekennzeichnet, dass** der Generator (R) ein permanentmagneterregter Ringgenerator mit einem hohlen Läufer zum Durchführen des Abtriebsstranges (29) ist.

5. Straßenfertiger nach Anspruch 2 oder 3, **dadurch gekennzeichnet, dass** das, vorzugsweise leistungsverzweigende, Pumpenverteilergetriebe (30) entweder am Generator (R) oder am den Generator (R) enthaltenden, vorzugsweise standardisierten, Kupplungs- oder Schwungradgehäuse (20) montiert ist.

6. Straßenfertiger nach Anspruch 1, **dadurch gekennzeichnet, dass** sich der Abtriebsstrang (29) durch das Pumpenverteilergetriebe (30) erstreckt, und dass der Generator (R) und das Pumpenverteilergetriebe (30) mit einer von der Drehzahl des Abtriebsstranges (29) verschiedenen Drehzahl antreibbar sind.

7. Straßenfertiger nach wenigstens einem der vorhergehenden Ansprüche, **dadurch gekennzeichnet, dass** zwischen dem Läufer (28) des Generators (R) und dem Abtriebsstrang (29) zumindest eine Planetengetriebe-Stufe (43) angeordnet ist, vorzugsweise zumindest teilweise innerhalb des Läufers (28) und/oder eines Zwischengehäuses (44) zwischen dem Generator (R) und dem Pumpenverteilergetriebe (30).

8. Straßenfertiger nach wenigstens einem der vorhergehenden Ansprüche, **dadurch gekennzeichnet, dass** zumindest zwischen dem Läufer (28) und dem Leistungsabgabebereich oder dem Abtriebsstrang (29) eine schaltbare Kupplung (34) angeordnet ist.

9. Straßenfertiger nach Anspruch 8, **dadurch gekennzeichnet, dass** die schaltbare Kupplung (34) wirkungsmäßig zwischen dem ein an das Pumpenverteilergetriebe (30) angeflanschtes Fahrantriebs-Pumpenaggregat (42) permanent antreibenden Abtriebsstrang (29) und der Planetengetriebe-Stufe (43) und/oder einer Eingangswelle (33, 49) des Pumpenverteilergetriebes (30) angeordnet ist.

10. Straßenfertiger nach wenigstens einem der vorhergehenden Ansprüche, **dadurch gekennzeichnet, dass** für den Generator (R), vorzugsweise inklusive der Planetengetriebe-Stufe (43), ein Kühlsystem (50) vorgesehen ist.

11. Straßenfertiger nach Anspruch 10, **dadurch gekennzeichnet, dass** der Läufer (28) des Generators (R) trocken läuft und mit wenigstens einem Kühllüfterrad (53) verbunden ist.

12. Straßenfertiger nach Anspruch 10, **dadurch gekennzeichnet, dass** das Kühlsystem (50) ein Flüssigkeitskühlsystem ist, das, vorzugsweise, zumindest einen über das Pumpenverteilergetriebe (30) geführten Kühlkreislauf (60) umfasst.

## Claims

1. Road paver (F), comprising as a primary driving aggregate (P) a combustion engine (M), particularly a diesel engine, the crank-shaft (22) of the combustion engine (M) ending in a power output region, and at least one generator (R) as well as at least one distribution gear mechanism for pumps (30), the generator (R) being drivable by the combustion engine (M) via the power output region at least for supplying electric heating devices arranged at the road paver (F) and/or in a paving screed (B) of the road paver (F), **characterised in that** the generator (R) is connected to the combustion engine (M) coaxial to the crankshaft (22) at or in a casing (20) for a clutch or for a flywheel or instead of the casing (20) for a clutch or for a flywheel, that the distribution gear mechanism for pumps (30) is installed at the side of the generator (R) that faces away from the combustion engine (M), that a drive train (29) permanently connected by a torsionally flexible coupling (23) in the power output region to the crankshaft (22) extends through a runner of the generator (R) at least to the distribution gear mechanism for pumps (30), and that at least the generator (R) can be driven with a speed different from the speed of the drive train (29).

2. Road paver according to claim 1, **characterised in that** the generator (R) is mounted at least in part in a ring space of a casing (20) for a clutch or for a flywheel that is provided at a engine block of the combustion engine (M), and that the ring space is provided between the torsionally flexible coupling (23)and the casing (20).

3. Road paver according to claim 1, **characterised in that** the generator (R) is arranged with a stator ring (27) or with an intermediate casing containing the stator ring between the engine block of the combustion engine (M) and the distribution gear mechanism for pumps (30).

4. Road paver according to claim 1, **characterised in that** the generator (R) is a ring generator with permanent magnet excitation and a hollow ring runner for accommodating the drive train (29).

5. Road paver according to claim 2 or 3, **characterised in that** the distribution gear mechanism for pumps (30), preferably a power branching gear mechanism, is mounted either at the generator (R) or at the, preferably standardised, casing (20) for a clutch or for a flywheel which casing (20) contains the generator (R).

6. Road paver according to claim 1, **characterised in that** the drive train (29) extends through the distribution gear mechanism for pumps (30), and that the generator (R) and the distribution gear mechanism for pumps (30) both can be driven with a speed different from the speed of the drive train (29).

7. Road paver according to at least one of the preceding claims, **characterised in that** at least one planetary gear stage (43) is arranged between the runner of the generator (R) and the drive train (29), preferably at least partly within the runner (28) and/or within an intermediate casing (44) arranged between the generator (R) and the distribution gear mechanism for pumps (30).

8. Road paver according to at least one of the preceding claims, **characterised in that** a switchable clutch (34) is arranged between the power output region and the runner (28) or the drive train (29).

9. Road paver according to claim 8, **characterised in that** the switchable clutch (34) functionally is arranged between the drive train (29) permanently driving a travelling drive pump aggregate (42) flanged to the distribution gear mechanism (30) for pumps and the planetary wheel gear stage (43) and/or of an input shaft (33, 49) of the distribution gear mechanism for pumps (30).

10. Road paver according to at least one of the preceding claims, **characterised in that** a cooling system (50) is provided for the generator (R), preferably also for the planetary gear stage (43).

11. Road paver according to claim 10, **characterised in that** the runner (28) of the generator (R) is running dry and is connected with at least one cooling fan wheel (53).

12. Road paver according to claim 10, **characterised in that** the cooling system (50) is a liquid cooling system, and preferably includes a cooling circuit (60) at least extending through the distribution gear mechanism for pumps (30).

## Revendications

1. Finisseur (F) comportant un moteur à combustion interne (M), en particulier un moteur diesel, comme groupe d'entraînement primaire (P), dans lequel le vilebrequin (22) du moteur à combustion interne (M) se termine par une section de transmission de puissance et dans lequel au moins un générateur (R) qui peut être entraîné par le moteur à combustion interne (M) via la section de transmission de puissance pour au moins alimenter des dispositifs de chauffage électriques (H) agencés sur le finisseur et/ou dans une poutre lisseuse (B) du finisseur, ainsi qu'au moins une boîte de transfert de pompe (30), sont pourvus dans le finisseur (F), **caractérisé en ce que** le générateur (R) est connecté sur ou dans un boîtier de volant d'inertie et d'accouplement (20) ou au lieu du boîtier de volant d'inertie et d'accouplement (20) du moteur à combustion interne (M) au moteur à combustion interne (M) de manière coaxiale par rapport au vilebrequin (22), **en ce que** la boîte de transfert de pompe (30) est montée sur le côté du générateur (R) qui fait face au moteur à combustion interne (M), **en ce qu'**une ligne de transmission (29) connectée de manière permanente au vilebrequin (22) via un accouplement (23) élastique en rotation dans la section de transmission de puissance est menée au moins jusqu'à la boîte de transfert de pompe (30) à travers un rotor du générateur (R), et **en ce qu'**au moins le générateur (R) peut être entraîné à une vitesse de rotation différente de la vitesse de rotation de la ligne de transmission (29).

2. Finisseur selon la revendication 1, **caractérisé en ce que** le générateur (R) est au moins partiellement incorporé dans un espace annulaire d'un boîtier de volant d'inertie et d'accouplement (20) agencé sur le bloc moteur du moteur à combustion interne (M), et **en ce que** l'espace annulaire est pourvu entre l'accouplement (23) élastique en rotation et le boîtier de volant d'inertie et d'accouplement (20).

3. Finisseur selon la revendication 1, **caractérisé en ce que** le générateur (R) est agencé avec un anneau de stator (27) ou un boîtier intermédiaire (27') comportant l'anneau de stator (27) entre le bloc moteur du moteur à combustion interne (M) et la boîte de transfert de pompe (30).

4. Finisseur selon la revendication 1, **caractérisé en ce que** le générateur (R) est un générateur annulaire comportant un inducteur à aimant permanent avec un rotor creux afin que la ligne de transmission (29) puisse le traverser.

5. Finisseur selon la revendication 2 ou 3, **caractérisé en ce que** la boîte de transfert de pompe (30), préférablement de distribution de puissance, est montée soit sur le générateur (R), soit sur le boîtier de volant d'inertie ou d'accouplement (20), préférablement normalisé, comportant le générateur (R).

6. Finisseur selon la revendication 1, **caractérisé en ce que** la ligne de transmission (29) s'étend à travers la boîte de transfert de pompe (30), et **en ce que** le générateur (R) et la boîte de transfert de pompe (30) peuvent être entraînés à une vitesse de rotation différente de la vitesse de rotation de la ligne de transmission (29).

7. Finisseur selon au moins l'une des revendications précédentes, **caractérisé en ce qu'**au moins un étage à train épicycloïdal (43) est agencé entre le rotor (28) du générateur (R) et la ligne de transmission (29), préférablement au moins partiellement dans le rotor (28) et/ou un boîtier intermédiaire (44) entre le générateur (R) et la boîte de transfert de pompe (30).

8. Finisseur selon au moins l'une des revendications précédentes, **caractérisé en ce qu'**un accouplement embrayable (34) est agencé au moins entre le rotor (28) et la section de transmission de puissance ou la ligne de transmission (29).

9. Finisseur selon la revendication 8, **caractérisé en ce que** l'accouplement embrayable (34) est agencé fonctionnellement entre la ligne de transmission (29) qui entraîne en permanence un groupe moto-pompe entraîné (42) monté par bride sur la boîte de transfert de pompe (30) et l'étage de train épicycloïdal (43) et/ou un arbre d'entrée (33, 49) de la boîte de transfert de pompe (30).

10. Finisseur selon au moins l'une des revendications précédentes, **caractérisé en ce qu'**un système de refroidissement (50) est pourvu pour le générateur (R), comprenant préférablement l'étage à train épicycloïdal (43).

11. Finisseur selon la revendication 10, **caractérisé en ce que** le rotor (28) du générateur (R) tourne à sec et est connecté à au moins une hélice de ventilateur de refroidissement (53).

12. Finisseur selon la revendication 10, **caractérisé en ce que** le système de refroidissement (50) est un système à fluide de refroidissement qui comporte préférablement au moins un circuit de refroidissement (60) mis en circulation via la boîte de transfert de pompe (30).
